# FASCICULE DE BREVET EUROPEEN

(11) **EP 2 416 898 B1**
(45) Date de publication et mention de la délivrance du brevet: **11.11.2015**
(21) Numéro de dépôt: 10707589.7
(22) Date de dépôt: 26.01.2010
(51) Int. Cl.: B09B 1/00, C05F 17/00, B07B 1/46

(54) **PROCEDE POUR LE TRAITEMENT DES DÉCHETS**
VERFAHREN ZUR BEHANDLUNG VON ABFALL
METHOD FOR TREATING WASTE

(30) Priorité: 26.01.2009 FR 0950456
(43) Date de publication de la demande: 15.02.2012
(73) Titulaire: Costa-Lunga Née Giannas, Christiane, 13012 Marseille (FR)
(72) Inventeur: Costa-Lunga Née Giannas, Christiane, 13012 Marseille (FR)
(74) Mandataire: Roman, Alexis
(86) Numéro de dépôt international: PCT/FR2010/050116
(87) Numéro de publication internationale: WO 2010/084294

(56) Documents cités:
- DE-A1- 3 703 442
- IRANPOUR R., STENSTROM M., TCHOBANOGLOUS G., MILLER D., WRIGHT J., VOSSOUGHI M.: "Environmental Engineering : energy value of replacing waste disposal with resource recovery" SCIENCE MAG, vol. 285, no. 5428, 30 juillet 1999 (1999-07-30), pages 706-711, XP002551464
- 'This termite can savour plastic waste', [en ligne] 12 Septembre 2002, Times of India Extrait de l'Internet: <URL:http://articles.timesofindia.indiatime s.com/2002-09-12/lucknow/27314547_1_termite -plastic-wastes-assam> [extrait le 2012-11-22]
- CHARLES WENDO: 'Termites may hold solution to polythene waste', [en ligne] 17 Janvier 2003, SciDevNet Extrait de l'Internet: <URL:http://www.scidev.net/global/news/term ites-may-hold-solution-to-polythene-waste.h tml> [extrait le 2012-11-22]

## Description

### Domaine technique de l'invention.

La présente invention a pour objet un procédé pour le traitement des déchets ménagers et de certains déchets industriels.

Elle a également pour objet un dispositif permettant la mise en oeuvre de ce procédé.

L'invention se rapporte au domaine technique des solutions de traitement des déchets et en particulier celui de l'enfouissement des déchets en décharge qui est à ce jour la solution majoritairement retenue pour l'élimination des déchets.

### État de la technique.

On connait les solutions de traitement des déchets en décharge consistant à enfouir les déchets dans une fosse. Afin d'éviter que les déchets ne contaminent les sols avoisinants, les parois et le fond de la fosse sont généralement revêtus d'une membrane protectrice en géotextile séparant l'intérieur de l'extérieur de la fosse. Le document DE 3703442 , qui est considéré comme le document le plus proche de la revendication 1, (RICHTER) décrit par exemple une telle solution.

Le principal inconvénient de cette solution de traitement des déchets est la durée importante nécessaire à la décomposition naturelle des déchets enfouis dans la fosse. Le temps de décomposition est d'autant plus grand que les déchets enfouis dans la fosse ont une faible biodégradabilité comme par exemple les matières plastiques.

Un autre inconvénient de cette solution résulte dans le fait que certaines substances contenues dans les déchets peuvent avoir des effets néfastes sur la santé humaine. Ces substances peuvent par exemple être véhiculées par l'eau de pluie qui s'écoule dans les sols au travers de la membrane protectrice en géotextile. Par exemple, le phtalate qui peut être contenu dans le PVC peut, en cas d'ingestion par l'homme, provoquer de graves troubles au niveau du foie, des reins et des testicules.

Face à cet inconvénient, l'invention a pour objectif de fournir un procédé pour le traitement des déchets permettant d'accélérer la décomposition et la destruction des déchets non recyclées, notamment ceux en matière plastique, et de réduire le risque de contamination des personnes et des sols par des substances toxiques contenues dans ces déchets.

Un autre objectif de l'invention est de fournir un procédé pour le traitement des déchets simple à mettre en oeuvre via un dispositif d'encombrement réduit et peu onéreux.

### Divulgation de l'invention.

La solution proposée par l'invention est un procédé pour le traitement de déchets en matière plastique selon la revendication 1 dans lequel :
- on creuse une fosse,
- on recouvre les parois et le fond de la fosse d'une membrane protectrice,
- on enfouit les déchets en matière plastique dans la fosse avec de la terre,
- on incorpore plusieurs races d'isoptères dans les déchets en matière plastique enfouis.

Ce procédé permet d'accélérer la destruction des déchets enfouis dans la fosse par incorporation d'isoptères dans lesdits déchets enfouis. En effet, les isoptères ont la capacité de consommer un grand nombre de déchets et notamment des déchets à faible biodégradabilité, tels que les matières plastiques notamment ceux à base de macromolécules synthétisées par l'homme, et dont certains sont toxiques pour l'homme, limitant de ce fait la propagation des substances toxiques dans le sol. En particulier, certains isoptères consomment le PVC qui, lorsqu'il contient des phtalates, peut constituer un risque d'intoxication pour une personne qui viendrait à l'ingérer. Il est également possible d'enfouir des déchets en élastomère qui seront également consommés par les isoptères. En outre, l'incorporation de plusieurs races d'isoptères permet le traitement d'un maximum de déchets de natures différentes.

L'article IRANPOUR R., et al : « Environmental Engineering : energy value of replacing waste disposal with resource recovery». SCIENCE MAG, vol. 285, no. 5428, 30 juillet 1999, page 706-711; évoque l'utilisation de termites pour le traitement de déchets, mais uniquement des déchets bois.

L'article « this termite can savour plastic waste ». TIMES OF INDIA, 12 septembre 2002 évoque la consommation de déchets plastiques par des termites de races Genera Microtermes, se trouvant exclusivement à Assam (Inde). Et l'article Charles WENDO : « Termites may hold solution to polythene waste ». SciDevNet, 17 janvier 2003, évoque la dégradation de déchets polyethènes par des termites de races Macrotermes herus. Aucun de ces articles n'envisage toutefois le traitement de déchets plastique par plusieurs races d'isoptères.

Selon une caractéristique avantageuse de l'invention permettant d'éviter la perforation de la membrane protectrice par les isoptères, on traite ladite membrane protectrice pour résister aux isoptères.

Selon une variante de réalisation de l'invention permettant d'éviter la perforation de la membrane protectrice par les isoptères, on recouvre la partie supérieure de la membrane protectrice, en contact avec les déchets imputrescibles notamment en matière plastique enfouis avec de la terre, d'un film traité pour résister aux isoptères.

Selon une autre variante de réalisation de l'invention permettant d'éviter la perforation de la membrane protectrice par les isoptères, on recouvre ladite membrane protectrice de part et d'autre d'un film traité pour résister aux isoptères.

Selon encore une autre caractéristique avantageuse de l'invention, on incorpore des isoptères de race Mastoterne Darwiniensis. L'utilisation de cette race d'isoptères permet de traiter des déchets de différentes natures, les Mastoterne Darwiniensis ayant la particularité d'être polyphages et étant notamment particulièrement capables d'ingérer de la cellulose, de la laine, et de l'ivoire.

Selon encore une autre caractéristique avantageuse de l'invention permettant un traitement dans des régions arides, on incorpore des isoptères de race Cubiternes, car elles manifestent une très grande activité nitrogénésique.

D'autres caractéristiques avantageuses de l'invention sont définies dans les autres revendications secondaires.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 représente schématiquement la fosse du dispositif pour le traitement des déchets objet de l'invention,
- la figure 2 représente schématiquement la fosse de la figure 1 dont les parois et le fond sont recouverts d'une membrane protectrice,
- la figure 3 représente schématiquement la fosse de la figure 2 dans laquelle des déchets sont enfouis avec de la terre,
- la figure 4 représente schématiquement la fosse de la figure 3 dans laquelle des isoptères sont incorporés dans les déchets enfouis,
- la figure 5 représente schématiquement le dispositif pour le traitement des déchets objet de l'invention équipé d'une membrane protectrice recouverte de part et d'autre d'un film traité pour résister aux isoptères.

### Modes de réalisation de l'invention.

La présente invention concerne un procédé pour le traitement de déchets (1) par enfouissement desdits déchets en décharge. De manière générale, les déchets (1) à traiter peuvent se présenter sous la forme de déchets ménagés ou industriels ne présentant pas de danger direct pour l'homme comme des risques d'explosion, des risques de contamination radioactive, des risques de contamination biologique, etc. En pratique, les déchets (1) destinés à être enfouies sont des déchets considérés « ultimes », c'est-à-dire qu'ils n'ont pas été recyclés (par exemple les plastiques du type emballages plastiques, blisters, bouteilles, ou autres, le bois traité, etc.), ou des déchets réellement « ultimes » c'est-à-dire qu'ils proviennent de résidus obtenus après recyclage. Or, la majorité de ces déchets, notamment les déchets en matière plastique du type à base de macromolécules synthétisées par l'homme, les déchets en PVC, les déchets en élastomères, ou autres, a une faible biodégradabilité, c'est-à-dire que les déchets sont imputrescibles et qu'ils mettent des dizaines voir des centaines d'années pour se décomposer après enfouissement en terre.

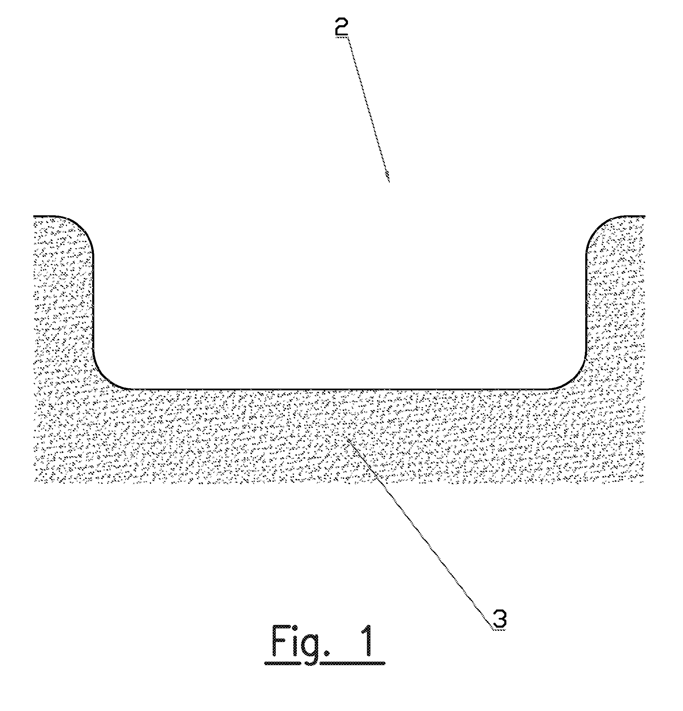

En se rapportant à la figure 1, une fosse (2), destinée à recevoir les déchets (1) à enfouir, est creusée dans le sol (3). Cette fosse est généralement creusée au moyen de machines de chantiers conventionnels du type pelleteuse, bulldozer, etc. Selon les besoins, les dimensions de la fosse (2) peuvent varier de plusieurs centaines de m³ pour des décharges dédiées à des zones de faible densité de population, à plusieurs milliers de m³ pour des décharges dédiées à des zones de forte densité de population.

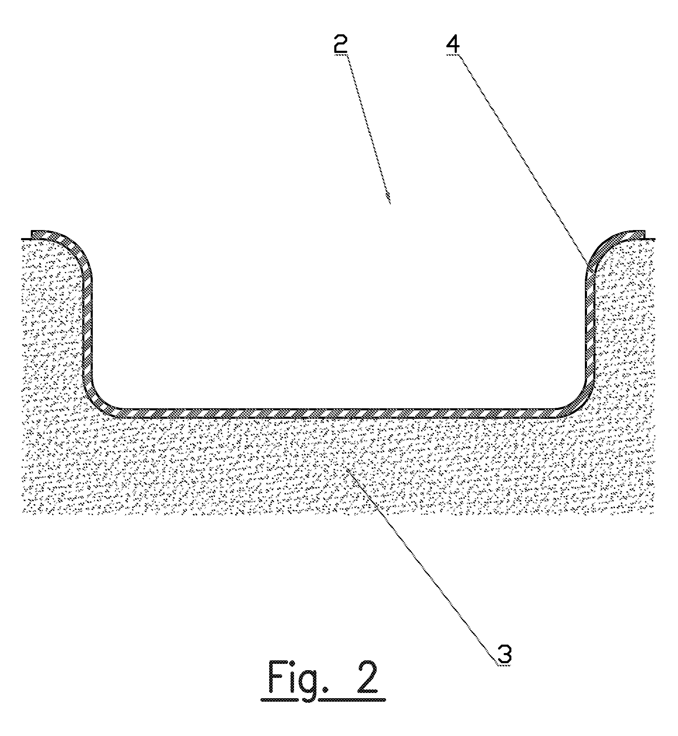

Comme représenté sur la figure 2, et afin de protéger le sol (3), la faune et la flore environnants contre d'éventuelles contaminations par les déchets (1), les parois et le fond de la fosse (2) sont recouverts d'une membrane protectrice (4). Cette dernière se présente généralement sous la forme d'une membrane en géotextile qui a la propriété d'interdire le mélange des deux couches de sol qu'elle sépare, sans inhiber le passage de l'eau et des sels minéraux. Le géotextile est un textile réalisé en matière synthétique ou naturel dont la trame est tissée ou non. La membrane protectrice (4) en géotextile peut par exemple être réalisée en PVC et avoir une épaisseur d'un millimètre à quelques centimètres.

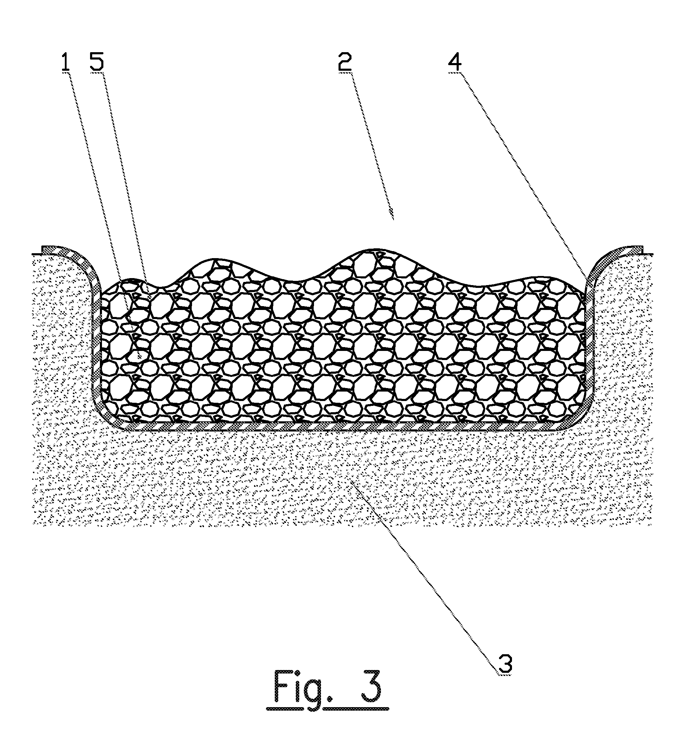

En se référant à la figure 3, les déchets (1) sont enfouis dans la fosse (2) avec de la terre (5). Les déchets (1) peuvent être préalablement broyés à l'aide de broyeurs industriels. Ils sont généralement acheminés vers la décharge par camion-benne, par remorque, etc. Les déchets (1) sont enfouis avec de la terre (5) soit par dépôts successifs de couches de déchets (1) et de terre (5) dans la fosse (2), soit par mélange de terre (5) avec des déchets (1) au cours des opérations de broyage, au moyen de machine de chantier du type pelleteuse, ou par tout autre moyen convenant à l'homme du métier.

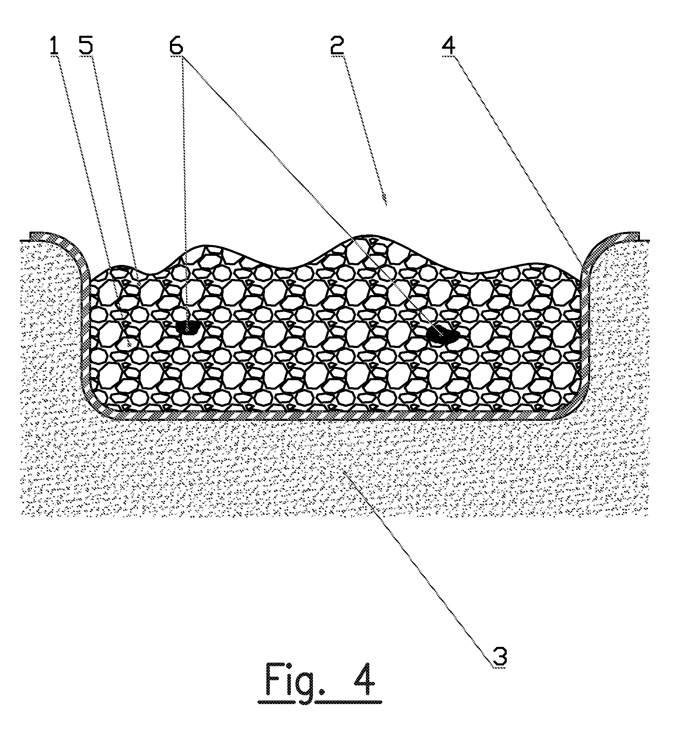

Comme schématisé sur la figure 4, on incorpore des isoptères (6) dans les déchets (1) enfouis. Les isoptères (6) ont la capacité de consommer divers produits, notamment des produits ayant une faible biodégradabilité. Les isoptères (6) peuvent être incorporés naturellement, c'est-à-dire qu'ils sont déposés à la surface du mélange à base de déchets (1) enfouis et de terre (5) et qu'ils s'incorporent alors par leurs propres moyens dans les déchets (1) enfouis en creusant des galeries. Les isoptères (6) peuvent également être incorporés artificiellement en réalisant des puits à l'intérieur du mélange à base de déchets (1) enfouis et de terre (5) dans lesquels sont incorporés les isoptères avant rebouchage des puits. Les puits peuvent être creusés puis rebouchés à l'aide de tractopelle, de pelleteuse, ou toute autre machine de chantier convenant à l'homme du métier. Les isoptères (6) peuvent être incorporés individuellement ou en nid de plusieurs centaines ou milliers d'individus selon la masse de déchets (1) à traiter.

Différentes races ou familles d'isoptères (6) peuvent être incorporées comme par exemple les Acanthotermitidés, les Kalotermitidés, les Eutermitidés, les Holotermitidés, les Mastotermitidés, les Nasutermitidés, les Néotermitidés, les Rhinotermitidés (Reticulitermes lucifugus, Reticulitermes flavipes, Reticulitermes grassei, Reticulitermes banyulensis, Reticulitermes urbis, Reticulitermes balkanensis), les Schedorhinotermitidés, les Termitidés, les Termopsidés, etc.

Il est notamment possible d'incorporer des isoptères (6) de race Mastoterne Darwiniensis qui sont polyphages, contrairement à d'autres espèces qui sont monophages et peuvent par exemple se nourrir essentiellement de bois. Ces isoptères (6) de race Mastoterne Darwiniensis sont particulièrement adaptés au traitement des déchets à base de cellulose, de laine, d'ivoire, etc.

Il est également possible, pour un traitement dans des régions arides, d'incorporer des isoptères (6) de race Cubiternes, qui habitent les savanes très sèches de certains pays d'Afrique.

Il est astucieux d'incorporer plusieurs races d'isoptères (6) dans les déchets enfouis d'une même fosse. Les différentes races d'isoptères (6) sont alors chacune dédiée au traitement de différentes matières, par exemple des Mastoterne Darwiniensis pour la laine, les Kalotermes flavicollis (polyphages et vivant dans l'ouest de la France méridionale) pour le bois, etc.

Il est encore possible d'utiliser des isoptères (6) susceptibles de produire du méthane par consommation de déchets (1) fermentescibles. En effet, certaines races d'isoptère (6) produisent du méthane en quantité importante qui peut être récupéré au moyen d'extracteur d'air et être épuré au moyen de filtres air/méthane. Le méthane ainsi collecté peut ensuite être utilisé comme combustible en chaudière ou en four de process, pour la production d'énergie électrique au moyen de turbine à vapeur ou de groupe électrogène, comme carburant automobile, comme gaz naturel dans les réseaux de gaz de ville.

Afin d'éviter la prolifération des isoptères (6) à l'extérieure de la fosse (2) mais également de protéger la membrane protectrice (4) contre l'assimilation par lesdits isoptères, ladite membrane protectrice peut être traitée pour résister aux isoptères (6). La membrane protectrice (4) peut par exemple être imprégnée ou recouverte de part et d'autre d'un termicide du type perméthrine, fipronil ou tout autre termicide connu de l'homme du métier.

Dans une variante de réalisation permettant à la fois d'éviter la prolifération des isoptères (6) à l'extérieur de la fosse (2) mais également de protéger la membrane protectrice (4) contre l'assimilation par lesdits isoptères, la partie supérieure de ladite membrane protectrice en contact avec les déchets (1) enfouis avec de la terre (5) peut être recouverte d'un film (7) traité pour résister aux isoptères.

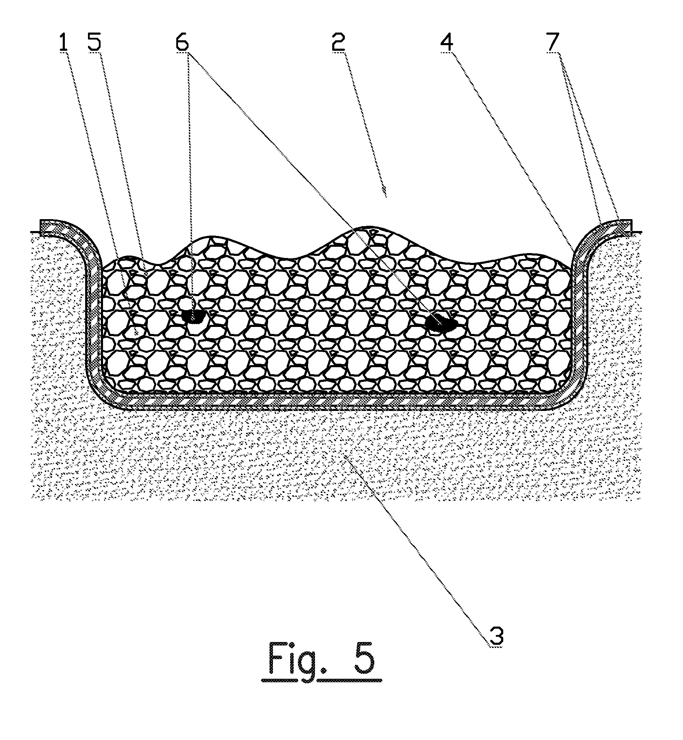

Dans une variante de réalisation représentée sur la figure 5 permettant à la fois d'éviter la prolifération des isoptères (6) à l'extérieur de la fosse (2), à la fois de protéger la membrane protectrice (4) contre l'assimilation par lesdits isoptères, à la fois de protéger ladite membrane protectrice contre l'assimilation par d'éventuels isoptères vivant dans le sol (3) à l'extérieur de la fosse (2), ladite membrane protectrice est recouverte de part et d'autre d'un film (7) traité pour résister aux isoptères (6).

Le film (7) peut par exemple être réalisé à base de polyéthylène et d'un termicide du type de ceux précédemment évoqués. Ce film (7) peut avoir une épaisseur d'un millimètre à plusieurs centimètres. Il peut être fixé sur la membrane protectrice (4) par collage, soudure ou tout autre moyen convenant à l'homme du métier.

En résumé, au cours du procédé pour le traitement de déchets (1) :
- on creuse une fosse (2) (voir figure 1),
- on recouvre les parois et le fond de la fosse (2) d'une membrane protectrice (4) (voir figure 2),
- on enfouit les déchets (1) dans la fosse (2) avec de la terre (5) (voir figure 3),
- on incorpore plusieurs races d'isoptères (6) dans les déchets (1) enfouis (voir figure 4).

## Revendications

1. Procédé pour le traitement des déchets (1) comprenant des matières plastiques dans lequel :
- on creuse une fosse (2),
- on recouvre les parois et le fond de la fosse (2) d'une membrane protectrice (4),
- on enfouit les déchets (1) en matière plastique dans la fosse (2) avec de la terre (5),
- on incorpore plusieurs races d'isoptères (6) dans les déchets (1) en matière plastique enfouis, chacune dédiée au traitement de différentes matières.

2. Procédé selon l'une des revendications précédentes, dans lequel les isoptères (6) incorporés dans les déchets (1) sont choisis dans la liste suivante : Acanthotermitidés, Kalotermitidés, Eutermitidés, Holotermitidés, Mastotermitidés, Nasutermitidés, Néotermitidés, Rhinotermitidés, Schedorhinotermitidés, Termitidés, Termopsidés.

3. selon l'une des revendications 1 à 3, dans lequel les isoptères (6) sont déposés à la surface du mélange à base de déchets (1) enfouis et de terre (5), lesquels isoptère s'incorporent par leurs propres moyens dans les déchets (1) enfouis en creusant des galeries.

4. Procédé selon l'une des revendications 1 à 3, dans lequel les isoptères (6) sont incorporés artificiellement en réalisant des puits à l'intérieur du mélange à base de déchets (1) enfouis et de terre (5) et dans lesquels sont incorporés lesdits isoptères avant rebouchage desdits puits.

5. Procédé selon l'une des revendications précédentes, dans lequel les isoptères sont incorporés individuellement ou en nid de plusieurs centaines ou milliers d'individus selon la masse de déchets (1) à traiter.

6. Procédé selon l'une des revendications précédentes, dans lequel les déchets (1) sont en matière plastique à base de macromolécules synthétisées par l'homme.

7. Procédé selon l'une des revendications précédentes, dans lequel on enfouit également des déchets en élastomère.

8. Procédé selon l'une des revendications précédentes, dans lequel on traite la membrane protectrice (4) avec un termicide pour résister aux isoptères (6).

9. Procédé selon l'une des revendications 1 à 8, dans lequel on recouvre la partie supérieure de la membrane protectrice (4), en contact avec les déchets (1) en matière plastique enfouis avec de la terre (5), d'un film (7) traité avec un termicide pour résister aux isoptères (6).

10. Procédé selon l'une des revendications 1 à 8, dans lequel on recouvre la membrane protectrice (4) de part et d'autre d'un film (7) traité avec un termicide pour résister aux isoptères (6).

11. Procédé selon l'une des revendications précédentes dans lequel on incorpore des isoptères (6) de race Mastoterne Darwiniensis.

12. Procédé selon l'une des revendications 1 à 11 dans lequel, pour un traitement dans les régions arides, on incorpore des isoptères (6) de race Cubiternes.

## Patentansprüche

1. Verfahren zur Behandlung von Abfall (1), der Kunststoffe umfasst,
wobei
- eine Grube (2) gegraben wird,
- die Wände und der Boden der Grube (2) mit einer Schutzmembran (4) bedeckt werden,
- der Kunststoffabfall (1) in der Grube (2) mit Erde (5) eingearbeitet wird,
- dem eingearbeiteten Kunststoffabfall (1) Isoptera (6) zugesetzt werden, die jeweils auf die Behandlung verschiedener Stoffe ausgerichtet sind.

2. Verfahren nach dem vorhergehenden Anspruch, wobei die dem Abfall (1) zugesetzten Isoptera (6) aus der folgenden Liste ausgewählt sind:
Acanthotermitidae, Kalotermitidae, Eutermitidae, Holotermitidae, Mastotermitidae, Nasutermitidae, Neotermitidae, Rhinotermitidae, Schedorhinotermitidae, Termitidae, Termopsidae.

3. Verfahren nach einem der Ansprüche 1 bis 2, wobei die Isoptera (6) auf der Oberfläche des auf eingearbeiteten Abfall (1) und Erde (5) basierendem Gemisch abgesetzt werden, wobei sich die Isoptera selbstständig in den eingearbeiteten Abfall (1) einbringen, indem sie Gänge bohren.

4. Verfahren nach einem der Ansprüche 1 bis 3, wobei die Isoptera (6) künstlich eingebracht werden, indem im Innern des auf eingearbeitetem Abfall (1) und Erde (5) basierenden Gemischs Schächte hergestellt werden und die Isoptera in diese eingebracht werden, bevor die Schächte wieder verschlossen werden.

5. Verfahren nach einem der Ansprüche 1 bis 3, wobei die Isoptera einzeln oder in einem Nest mit mehreren hunderten oder tausenden Individuen, je nach der zu behandelnden Masse an Abfall (1), eingebracht werden.

6. Verfahren nach einem der vorhergehenden Ansprüche, wobei der Abfall (1) aus Kunststoff auf Makromolekülen basiert, die vom Menschen synthetisiert wurden.

7. Verfahren nach einem der vorhergehenden Ansprüche, wobei auch Elastomerabfall eingearbeitet wird.

8. Verfahren nach einem der vorhergehenden Ansprüche, wobei die Schutzmembran (4) mit einem Termitenbekämpfungsmittel behandelt wird, um gegen Isoptera (6) beständig zu sein.

9. Verfahren nach einem der Ansprüche 1 bis 8, wobei der obere Teil der Schutzmembran (4), der mit dem mit Erde (5) eingearbeiteten Kunststoffabfall (1) in Kontakt ist, mit einer Folie (7) bedeckt wird, die mit einem Termitenbekämpfungsmittel behandelt wurde, um gegen die Isoptera (6) beständig zu sein.

10. Verfahren nach einem der Ansprüche 1 bis 6, wobei die Schutzmembran (4) von beiden Seitein mit einer Folie (7) bedeckt wird, die mit einem Termitenbekämpfungsmittel behandelt wurde, um gegen Isoptera (6) beständig zu sein.

11. Verfahren nach einem der vorhergehenden Ansprüche, wobei Isoptera (6) der Gattung Mastotermes Darwiniensis eingebracht werden.

12. Verfahren nach einem der Ansprüche 1 bis 11, wobei für eine Behandlung in ariden Regionen Isoptera (6) der Gattung Cubitermes eingebracht werden.

## Claims

1. Process for treating waste (1) comprising plastics, in which:
- a pit (2) is dug,
- the walls and the bottom of the pit (2) are covered with a protective membrane (4),
- the plastic waste (1) is buried in the pit (2) with earth (5),
- several breeds of Isoptera (6) are incorporated into the buried plastic waste (1), each dedicated to the treatment of various materials.

2. Process according to the preceding claim, in which the Isoptera (6) incorporated into the waste (1) are chosen from the following list: Acanthotermitinae, Kalotermitidae, Eutermitinae, Hodotermitidae, Mastotermitidae, Nasutermitinae, Neotermitinae, Rhinotermitidae, Schedorhinotermes, Termitidae and Termopsidae.

3. Process according to either of Claims 1 and 2, in which the Isoptera (6) are deposited at the surface of the mixture based on buried waste (1) and earth (5), which Isoptera incorporate themselves, by their own means, into the buried waste (1) by digging galleries.

4. Process according to one of Claims 1 to 3, in which the Isoptera (6) are artificially incorporated by making wells inside the mixture based on buried waste (1) and earth (5), into which said Isoptera are incorporated before filling in said wells again.

5. Process according to one of the preceding claims , in which the Isoptera are incorporated individually or in a nest of several hundreds or thousands of individuals according to the mass of waste (1) to be treated.

6. Process according to one of the preceding claims, in which the waste (1) is made of plastic based on macromolecules synthesized by human beings.

7. Process according to one of the preceding claims, in which elastomer waste is also buried.

8. Process according to one of the preceding claims, in which the protective membrane (4) is treated with a termiticide in order to resist the Isoptera (6).

9. Process according to one of Claims 1 to 8, in which the upper part of the protective membrane (4), in contact with the plastic waste (1) buried with earth (5), is covered with a film (7) treated with a termiticide in order to resist the Isoptera (6).

10. Process according to one of Claims 1 to 8, in which the protective membrane (4) is covered on both sides with a film (7) treated with a termiticide in order to resist the Isoptera (6).

11. Process according to one of the preceding claims, in which Isoptera (6) of the Mastotermes darwiniensis breed are incorporated.

12. Process according to one of Claims 1 to 11, in which, for a treatment in arid regions, Isoptera (6) of the Cubitermes breed are incorporated.
